(19) Europäisches Patentamt
European Patent Office
Office européen des brevets

(11) **EP 1 677 476 B1**

(12) **FASCICULE DE BREVET EUROPEEN**

(45) Date de publication et mention
de la délivrance du brevet:
**21.11.2007 Bulletin 2007/47**

(51) Int Cl.:
*H04L 27/26* (2006.01)     *G01S 5/14* (2006.01)

(21) Numéro de dépôt: **04293152.7**

(22) Date de dépôt: **28.12.2004**

(54) **GPS/OFDM terminal with shared FFT/IFFT calculation means**

GPS/OFDM Terminal mit gemeinsamem FFT/IFFT Prozessor

Terminal GPS/OFDM avec FFT/IFFT moyens en commun

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**05.07.2006 Bulletin 2006/27**

(73) Titulaire: **Alcatel Lucent**
**75008 Paris (FR)**

(72) Inventeur: **Monnerat, Michel**
**31000 Toulouse (FR)**

(74) Mandataire: **Hedarchet, Stéphane et al**
**Alcatel Lucent**
**Intellectual Property & Standards**
**54 rue La Boétie**
**75008 Paris (FR)**

(56) Documents cités:
**WO-A-99/26370          FR-A- 2 806 580**
**GB-A- 2 370 476        US-A- 6 111 540**

## Description

La présente invention concerne un procédé visant à optimiser l'architecture d'un terminal mobile, supportant d'une part une fonction de localisation basée sur la réception de signaux provenant d'un système GNSS (de l'anglais "Global Navigation Satellite System") et supportant d'autre part une communication sans fil utilisant une modulation OFDM (de l'anglais "Orthogonal Frequency Diversity Multiplexing"), telle qu'une fonction WIFI™ répondant à la norme 802.11a ou g, ou encore supportant une fonction WIFI grâce à une puce "dual band" répondant à la fois à une norme non compatible au codage OFDM et à une norme qui le soit.

Dans un système de positionnement par satellite utilisant des terminaux du type RNSS (de l'anglais "Radio Navigation Satellite System") tels qu'un terminal GPS (de l'anglais "Global Positioning System") ou GLONASS, les signaux de données permettant de calculer le positionnement du terminal proviennent de différents satellites (quatre au minimum pour déterminer quatre inconnues x, y, z et t)).

Le signal GPS émis par chacun des satellites est basé sur une technique de spectre étalé. Ainsi, le signal est un signal de données binaires modulé par un signal étalé spectralement selon un procédé d'accès multiple à répartition par code CDMA ("Code Division Multiple Access"). Autrement dit, chaque bit du signal de données est remplacé par une séquence d'étalement propre à chaque satellite. Les données sont transmises en mode série à 50 bits/s (50bits/s soit 0.02 s/bit). Une séquence d'étalement tel qu'une séquence pseudo aléatoire de type Gold est transmise à un rythme beaucoup plus élevé : une séquence de Gold peut être considérée comme une suite de bits, parcourue avec une période d'horloge bien définie ; l'expression appelée « moment de code » ou plus fréquemment « chip » désigne un bit de la séquence et, par extension, la durée d'un tel bit. La séquence d'étalement est ainsi transmise à un rythme de 1,023 Mchips/s (un chip dure donc environ1 μs) et comporte 1023 « chips » (soit une durée de 1 ms) : il y a donc 20 répétitions de séquences par bit de données.

La modulation par le signal étalé spectralement entraîne qu'un démodulateur "normal" verra le signal de réception comme du bruit.

Afin de séparer les signaux provenant de différents satellites, le terminal réalise une corrélation entre le signal reçu et une réplique locale du code d'étalement correspondant au satellite dont le contenu informationnel doit être extrait.

De manière générale, la fonction de corrélation $f(\tau)$ de deux signaux $f_i(t)$ et $f_j(t)$ est donnée par la relation :

$$f(\tau) = \int_{+\infty}^{-\infty} f_i(t).f_j(t-\tau).dt \ ,$$ où $\tau$ désigne un temps

variable. Bien entendu, dans la pratique, l'intégration ne se fait pas de -∞ à +∞ mais sur une période de temps finie, en divisant l'intégrale par la durée de ladite période. On parlera de fonction d'autocorrélation lorsque les fonctions $f_i(t)$ et $f_j(t)$ sont identiques et de fonction d'intercorrélation lorsque les fonctions $f_i(t)$ et $f_j(t)$ sont distinctes.

Chaque satellite k possède son propre signal pseudo-aléatoire $c_k(t)$. Chacun de ces signaux pseudo-aléatoires possède la propriété suivante : sa fonction d'autocorrélation est nulle sauf au voisinage du décalage temporel nul où elle prend une allure triangulaire ; autrement dit, l'intégrale $\int_{+\infty}^{-\infty} c_k(t).c_k(t-\tau).dt$ est nulle lorsque $\tau$ est non nul et est maximale lorsque $\tau$ est nul.

En outre, les signaux associés chacun à un satellite différent sont choisis de sorte que leur fonction d'intercorrélation soit nulle ; autrement dit, l'intégrale $\int_{+\infty}^{-\infty} c_k(t).c_{k'}(t-\tau).dt$ est nulle quel que soit $\tau$ lorsque k et k' sont différents.

Les signaux étalés spectralement des satellites sont donc choisis de façon à être orthogonaux.

Lorsque le terminal cherche à acquérir les données d'un satellite particulier, le terminal corrèle le signal reçu avec une réplique de la séquence pseudo-aléatoire du satellite recherché (la séquence du satellite lui est attribuée une fois pour toute et ne change pas durant toute la vie du satellite).

Ainsi, le signal reçu S(t) par le terminal est la somme de l'ensemble des signaux transmis par chaque satellite : $S(t) = \sum_{k=1}^{n} c_k(t).d_k(t)$, où n est le nombre de satellites, $c_k(t)$ désigne le signal étalé spectralement du satellite k et $d_k(t)$ désigne les données du satellite k.

Si on cherche à acquérir les données du satellite m, la réplique locale correspondra au signal $c_m(t)$. Ainsi, après corrélation et en supposant que les signaux d'étalement soient parfaitement orthogonaux, on élimine toutes les données des satellites non recherchés (les fonctions d'intercorrélation sont nulles) pour retrouver uniquement les données du satellite m. La corrélation est possible car la durée d'une séquence d'étalement est vingt fois plus petite que la durée d'un bit de données.

La phase d'acquisition du signal consiste à calculer la corrélation du signal reçu avec la réplique locale du code satellite recherché et ce, sur un domaine temporel équivalent à la périodicité du code soit 1 ms, avec une profondeur (borne de l'intégrale) dépendant de la performance de détection que l'on veut atteindre.

Toutefois, la mise en oeuvre d'une telle solution pose certaines difficultés, notamment en termes de complexité de calcul.

Parmi de nombreuses techniques de réduction de charge de calcul, le calcul de la fonction de correlation par l'intermédiaire de calculs de transformée de Fourier rapide est la technique la plus répandue et la plus efficace. Les étapes du calcul sont alors les suivants :

- calcul de la transformée de Fourier du signal entrant sur un support temporel donnée,
- calcul de la transformée de Fourier rapide de la réplique locale du code d'étalement correspondant au satellite dont l'information doit être extraite,
- multiplication des deux vecteurs résultants,
- calcul de la transformée de Fourrier Rapide Inverse du résultat du produit.

Même si cette méthode de calcul autorise un gain significatif en termes de complexité de calcul, elle n'en reste pas moins très coûteuse pour une mise en oeuvre sur des terminaux dont les capacités tant en termes de puissance de calcul qu'en termes de consommation sont réduites. C'est précisément le cas lors d'une mise en oeuvre sur un terminal mobile comme un téléphone mobile.

Par ailleurs, les techniques de communication basées sur des techniques de modulation OFDM se développent de plus en plus. Par exemple, les techniques connues WIFI™ 802.11a ou 802.11g sont basées sur une modulation de type OFDM.

La technique de modulation OFDM repose sur une technique de diversité de fréquence optimale obtenue par calcul de transformée de Fourier rapide du signal modulant. Les détails de cette technique peuvent être trouvés dans l'ouvrage *"The suitability of OFDM as a modulation technique for wireless telecommunications, with a CDMA comparison",* thèse soutenue par Eric Lawrey en octobre 1997. Il résulte que cette technique de modulation met en jeu un grand nombre de calculs de transformées de Fourier rapide. Pour ce faire, les fabricants de terminaux de communication mobiles développent des dispositifs de calcul spécifiques accroissant la complexité de l'architecture de ces terminaux mobiles mais aussi leur consommation.

Le document FR-A-2 806 580 montre un dispositif mobile comportant des moyens de localisation et des moyens de téléphonie mobile avec une même ressource de calculs, un processeur de traitement du signal, pour effectuer les traitements sur des signaux radioélectriques de localisation et des signaux radioélectriques de téléphonie mobile. Le processeur de traitement du signal ne peut pas effectuer les tâches de localisation et de téléphonie mobile en même temps, c'est pour ça que l'on prévoit un séquencement de ces tâches. Dans ce séquencement les tâches de téléphonie mobile auront une priorité plus élevée.

Dans le document WO 99/26370 il y a un récepteur reconfigurable de téléphonie mobile CDMA/OFDM dans lequel le récepteur de téléphonie mobile CDMA partage une FFT avec un récepteur OFDM. Dans le récepteur des télécommunications CDMA la FFT est utilisée pour identifier la fréquence Doppler d'un signal des télécommunications.

L'invention part de la remarque astucieuse selon laquelle les techniques de calcul GNSS et OFDM sont très proches l'une de l'autre ; l'invention consiste donc, de façon judicieuse, à mutualiser les ressources de manière à optimiser l'architecture des terminaux mobiles supportant à la fois une fonction de localisation par satellites et une fonction de communication sans fil basée sur une modulation OFDM.

A cet effet, l'invention a pour objet un terminal, notamment mobile, comprenant des moyens de traitement d'un signal de positionnement provenant d'un système de positionnement par satellites, des moyens de calcul de transformée de Fourier Directe et Inverse destinés à coopérer pour le calcul du point de positionnement du terminal, caractérisé en ce que le terminal comporte en outre :

- des moyens de communication sans fil utilisant une modulation OFDM,
- des moyens de gestion de priorités pour l'affectation des ressources des moyens de calcul de transformée de Fourier Directe/Inverse soit aux moyens de traitement de signaux de positionnement soit aux moyens de communication sans fil.

Selon un mode de réalisation, les signaux de positionnement étant décomposés en blocs, lesdits moyens de gestion de priorités comportent un algorithme comprenant les étapes suivantes :

- détection de l'utilisation des moyens de calcul de transformée de Fourier Directe/Inverse par les moyens de communication sans fil,
- si les moyens de calcul sont utilisés par les moyens de communication sans fil, alors la requête d'utilisation des ressources des moyens de calcul par les moyens de traitement de signaux de positionnement est mise en attente jusqu'à ce qu'au moins les moyens de communication sans fil aient terminé l'exploitation des ressources des moyens de calcul,
- si les moyens de calcul ne sont pas utilisés par les moyens de communication sans fil, alors la requête d'utilisation des ressources des moyens de calcul par les moyens de traitement de signaux de positionnement est satisfaite au moins pour le traitement sur une durée d'un bloc.

Selon un mode de réalisation, ledit algorithme comprend en outre les étapes suivantes :

- si les moyens de calcul sont utilisés par les moyens de traitement de signaux de positionnement, alors la requête d'utilisation des ressources des moyens de calcul par les moyens de communication sans fil est mise en attente jusqu'à ce qu'au moins les moyens de traitement de signaux de positionnement aient terminé l'exploitation des ressources des moyens de calcul sur la durée dudit bloc en cours, les ressources desdits moyens de calcul étant prioritairement affectés aux moyens de communication sans fil à l'expiration dudit traitement de positionnement pour ledit bloc en cours.

Selon un mode de réalisation, ladite communication sans fil utilisant une modulation OFDM est une communication répondant à la norme 802.11a ou g, dite WIFI™, ou encore une communication réalisée grâce à une puce "dual band" répondant à la fois à une norme non compatible à la modulation OFDM et à une norme qui le soit.

L'invention a également pour objet une méthode d'optimisation des ressources des moyens de calcul de transformée de Fourier Directe et Inverse d'un terminal, notamment mobile, comprenant des moyens de traitement d'un signal de positionnement provenant d'un système de positionnement par satellites, lesdits moyens de calcul étant destinés à coopérer pour le calcul du point de positionnement du terminal, caractérisée en ce que le terminal comportant en outre des moyens de communication sans fil utilisant une modulation OFDM, ladite méthode comprend une étape de gestion de priorités pour l'affectation des ressources des moyens de calcul de transformée de Fourier Directe/Inverse soit aux moyens de traitement de signaux de positionnement soit aux moyens de communication sans fil.

Selon un mode de réalisation, les signaux de positionnement étant décomposés en blocs, ladite méthode comporte les étapes suivantes :

- détection de l'utilisation des moyens de calcul de transformée de Fourier Directe/inverse par les moyens de communication sans fil,
- si les moyens de calcul sont utilisés par les moyens de communication sans fil, alors la requête d'utilisation des ressources des moyens de calcul par les moyens de traitement de signaux de positionnement est mise en attente jusqu'à ce qu'au moins les moyens de communication sans fil aient terminé l'exploitation des ressources des moyens de calcul,
- si les moyens de calcul ne sont pas utilisés par les moyens de communication sans fil, alors la requête d'utilisation des ressources des moyens de calcul par les moyens de traitement de signaux de positionnement est satisfaite au moins pour le traitement sur une durée d'un bloc

Selon un mode de réalisation, si les moyens de calcul sont utilisés par les moyens de traitement de signaux de positionnement, alors la requête d'utilisation des ressources des moyens de calcul par les moyens de communication sans fil est mise en attente jusqu'à ce qu'au moins les moyens de traitement de signaux de positionnement aient terminé l'exploitation des ressources des moyens de calcul sur la durée dudit bloc en cours, les ressources desdits moyens de calcul étant prioritairement affectés aux moyens de communication sans fil à l'expiration dudit traitement de positionnement pour ledit bloc en cours.

Selon un mode de réalisation, ladite communication sans fil utilisant une modulation OFDM est une communication répondant à la norme 802.11a ou g, dite WIFI™, ou encore une communication réalisée grâce à une puce "dual band" répondant à la fois à une norme non compatible à la modulation OFDM et à une norme qui le soit.

D'autres caractéristiques et avantages de l'invention apparaîtront à l'examen de la description détaillée ci-après, et des dessins annexés, sur lesquels :

- la figure 1 illustre, de façon schématique, un exemple de réalisation de l'architecture proposée dans le cadre de cette invention,
- la figure 2 illustre un mode de réalisation de méthode de gestion de priorités pour l'affectation des ressources des moyens de calcul de transformée de Fourier Directe/Inverse aux moyens de réception d'un signal de positionnement et aux moyens de communication sans fil utilisant une modulation OFDM.

Les dessins annexés pourront non seulement servir à compléter l'invention, mais aussi contribuer à sa définition, le cas échéant.

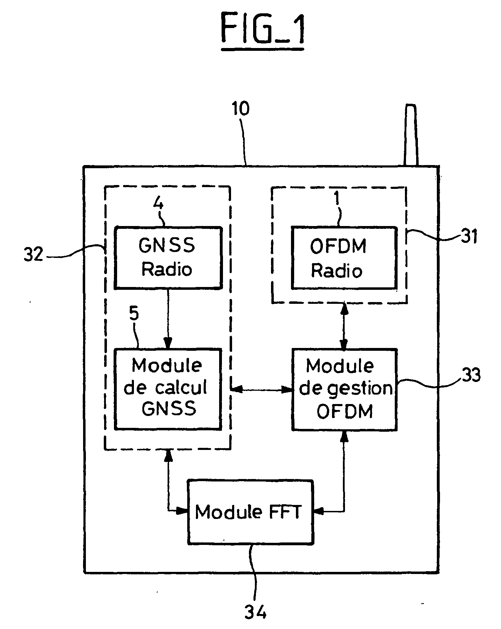

Sur la figure 1, le téléphone mobile 10 comporte un module 32 assurant une fonction de positionnement grâce à un système de positionnement par satellites GNSS ainsi qu'un module 31 de communication de type WIFI 802.11a ou 802.11g basé sur une modulation OFDM.

Le module WIFI 31 s'appuie sur un module radio 1 en charge de mettre les données à transmettre sur porteuse et transmettre les signaux de communication. Ce module radio 1 est également en charge de recevoir les signaux, les tranposer en bande de base et les transmettre à un module de gestion 33 détaillé dans la suite.

Le module WIFI s'appuie en outre sur un module de calcul 34 de FFT/FFT-1 en charge de générer la modulation en sous-porteuses, mais aussi en charge de générer le train binaire reçu à partir du signal modulé. Le téléphone 10 comporte, par ailleurs, dans le module 32, un module radio de positionnement 4, en charge notamment de recevoir les signaux satellitaires, et de les transposer en bande de base, et les numériser (bloc fonctionnel référencé 6 dans la suite).

Un module de calcul 5 GNSS est en charge de la gestion des signaux reçus par le module de positionnement 4 ainsi que des calculs de positionnement. Ce module de calcul 5 s'appuie sur le module de calcul 34 de FFT/FFT-1 pour calculer les correlations entre les signaux reçus par le module de positionnement 34 et le code du satellite recherché.

Dans un mode de réalisation, la gestion des priorités du module 34 de calcul de transformée de fourier rapide se caractérise en ce que :

- le module 34 traite en priorité les tâches liées à la fonction de communication sans fil WIFI,
- le module réalise les traitements liés au positionnement lorsqu'il n'est pas activé par la fonction de communication WIFI.

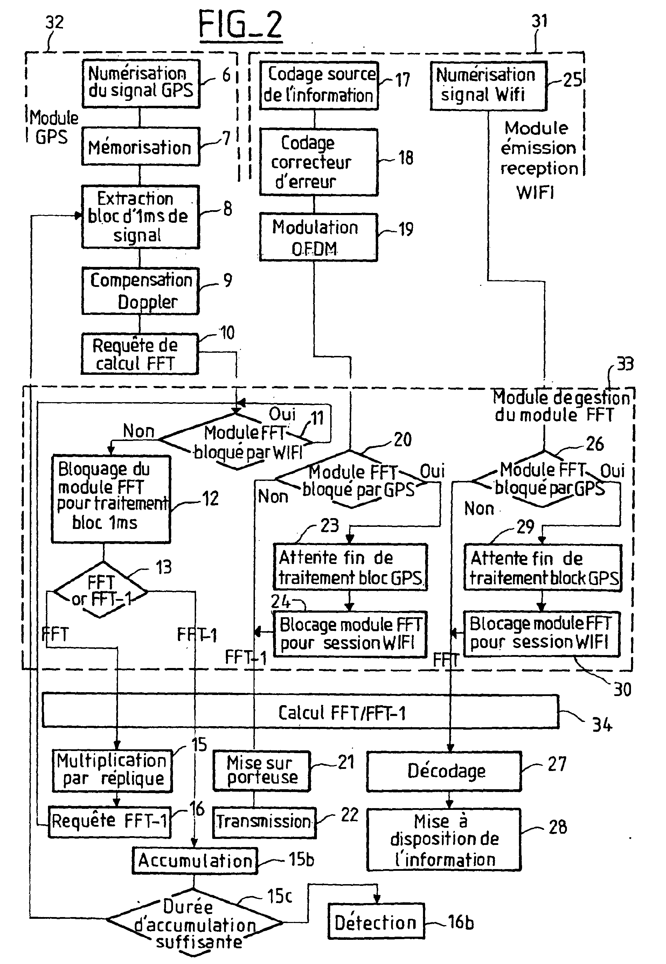

Un mode de réalisation selon l'invention est détaillé dans la suite et illustré à la figure 2.

Selon le mode de réalisation de la figure 2, l'architecture modulaire du téléphone 10 comporte les éléments suivants :

- le module de réception et de traitement des signaux GPS 32,
- le module d'émission/ réception des signaux WIFI 31,
- le module de calcul de transformée de Fourier Rapide sens direct et inverse 34,
- le module de gestion des priorités du module de calcul de transformées de Fourier 33.

Le traitement du signal de positionnement par satellites GPS (dit signal GPS) se caractérise par les étapes suivantes :

- numérisation du signal GPS à l'étape 6 : le signal provenant d'une antenne GPS, non décrite, puis converti en fréquence intermédiaire, est numérisé à l'aide d'un convertisseur analogique/numérique, également non décrit,
- mémorisation à l'étape 7 : le signal est alors converti en bande de base puis mémorisé en mémoire vive du terminal 10,
- extraction d'un bloc d'une milliseconde à l'étape 8. Le signal GPS est structuré en blocs d'1ms correspondant à la périodicité des codes d'étalement, comme expliqué ci-dessus. Le traitement se prête donc à un traitement par blocs d'1 ms,
- compensation Doppler à l'étape 9 : en vue de l'extraction d'un satellite particulier, il est possible, mais non nécessaire, de procéder à une correction de l'effet Doppler affectant le signal du satellite visé. Cette compensation se fait par multiplication complexe du signal par une rampe de phase correspondant à la fréquence Doppler prédite affectant le satellite recherché,
- requête FFT directe à l'étape 10. Le traitement standard des signaux GPS consiste, comme indiqué précédemment, à procéder à un calcul d'une corrélation du signal entrant avec une réplique locale du code d'étalement du satellite dont les informations doivent être extraites. Il est proposé, ici, de réaliser la corrélation par l'intermédiare d'un calcul de FFT par l'équivalence bien connue de l'homme de l'art :

$$f \otimes g = TF^{-1}\left[TF[f]^* \, conj(TF[g])\right]$$

où f et g sont 2 fonctions et où TF désigne la transformée de Fourier.

En vue de cette opération, un calcul de FFT est requis à l'étape 10.

- cette requête est émise vers le module 33 de gestion du module de FFT/FFT-1,
- l'opération à l'étape 11 vise à déceler si le module 34 est en cours d'utilisation par la fonction de communication WIFI 31. Si c'est le cas, alors la requête est mise en attente. Sinon, le module 34 est réservé par la fonction 12 pour le traitement du bloc d'1 ms en cours,
- une fonction 13 oriente le calcul sur une transformée de Fourier rapide Directe ou Inverse suivant la nature de la requête. Il est supposé que la nature de la requête est exprimée dans la requête elle-même de sorte que l'orientation de la fonction 13 soit une simple opération de comparaison d'un paramètre d'entrée,
- dans le cas d'une requête de transformée de Fourrier Directe, alors, à l'issue du calcul réalisé par le module 34, le résultat est multiplié, lors d'une étape 15, par une réplique locale de la transformée du code d'étalement du satellite recherché,
- le résultat de cette multiplicaiton doit alors faire l'objet d'un calcul de transformée inverse. La requête est émise par l'opérateur 16,
- cette requête retourne vers le module de gestion 33, où elle est traitée par les étapess 11 à 13 comme décrit précédemment,
- une transformée inverse est alors réalisée par le module 34,
- à l'issue de ce calcul, la fonction de corrélation sur 1 ms est obtenu. Ce résultat est accumulé avec les résultats précédents d'étapes 15b (e.g additionné avec les résultats précédents),
- si la durée d'accumulation 15c est suffisante, alors une détection de la présence d'un signal GPS est lancée à l'étape 16b. L'opération de détection est bien connue de l'homme de metier. Elle consiste à détecter la présence d'un pic de corrélation dans la fonction de corrélation et à décider si ce pic correspond à de l'énergie diffusée par un satellite.

Le module 31, quant à lui, est dédié aux communications sans fil WIFI :

- lorsqu'une information doit être émise, cette information est d'abord codée suivant un codage source donnée, effectué à l'étape 17. Le codage source consiste à transformer l'information en symboles transmissibles,
- ensuite, un codage correcteur d'erreur peut être appliqué, à l'étape 18,
- la mise en forme OFDM est alors gérée à l'étape 19 : la première opération consiste à calculer une transformée de Fourier. La requête est transmise au module 33,

- à l'étape 20, il est testé la disponibilité du module 34. Si le module de calcul 34 n'est pas disponible et est occupé par le module 32, alors, le calcul pour la communication sans fil WIFI est mis en attente jusqu'à la fin du calcul de FFT du bloc d'1ms en cours 23, puis la priorité est mise sur le traitement WIFI par le bloc 24 ,

le calcul de la FFT est réalisé par le module 34. Le résultat est alors mis sur porteuse à l'étape 21. Cette opération consiste à multiplier le résultat par un signal porteur à la fréquence d'émission souhaitée,

- le signal ainsi obtenu est alors transmis, à l'étape 22, à un dispositif d'amplification de puissance puis à une antenne radiante d'émission.

Lors de la réception d'un signal WIFI, l'opération est strictement réciproque. Le signal WIFI reçu, après avoir été traité par la chaine radio, est numérisé à l'étape 25,

- la première opération de traitement consiste à démoduler le signal par concentration de fréquence. Pour cela, le calcul de transformée de Fourier du signal reçu est nécessaire. Le signal reçu est donc transmis au module 33. L'étape 26 consiste à détecter si le module 34 est en cours d'utilisation par le module GPS 32. Si tel est le cas, les mêmes opérations que celles décrites précédemment concernant les étapes 20, 23 et 24 sont réalisées respectivement par les étapes 26, 29 et 30 (étape 29 : mise en attente jusqu'à fin du traitement du bloc courant GPS ; étape 30 : blocage du module FFT pour la session WIFI),
- la transformée de Fourier rapide est alors calculée, une fois que les resssources du module 34 ont été libérées pour le traitement WIFI. Le décodage correcteur d'erreur est alors appliqué à l'étape 27.
- l'information ainsi décodée est mise à disposition pour une utilisation liée à l'application à l'étape 28.

La présente invention propose donc une architecture avantageuse dans laquelle un module de communication WIFI et un module de positionnement par réseau de satellites tire avantageusement partie du partage et de la mise en commun, au moins partielle, des ressources de calcul de transformée de Fourier rapide.

**Revendications**

1. Terminal, notamment mobile, comprenant des moyens de traitement (32) d'un signal de positionnement provenant d'un système de positionnement par satellites (GNSS), des moyens de calcul (34) de transformée de Fourier Directe et Inverse destinés à coopérer pour le calcul du point de positionnement du terminal, où le terminal (10) comporte en outre :

- des moyens (31) de communication sans fil utilisant une modulation OFDM,
- des moyens (33) de gestion de priorités pour l'affectation des ressources des moyens de calcul (34) de transformée de Fourier Directe/Inverse soit aux moyens de traitement (32) de signaux de positionnement soit aux moyens (31) de communication sans fil.

2. Terminal selon la revendication 1, **caractérisé en ce que**, les signaux de positionnement (GPS) étant décomposés en blocs, lesdits moyens (33) de gestion de priorités comportent un algorithme comprenant les étapes suivantes :

- détection de l'utilisation des moyens de calcul (34) de transformée de Fourier Directe/Inverse par les moyens (31) de communication sans fil,
- si les moyens de calcul (34) sont utilisés par les moyens (31) de communication sans fil, alors la requête d'utilisation des ressources des moyens de calcul (34) par les moyens de traitement (32) de signaux de positionnement est mise en attente jusqu'à ce qu'au moins les moyens (31) de communication sans fil aient terminé l'exploitation des ressources des moyens de calcul (34),
- si les moyens de calcul (34) ne sont pas utilisés par les moyens (31) de communication sans fil, alors la requête d'utilisation des ressources des moyens de calcul (34) par les moyens de traitement (32) de signaux de positionnement est satisfaite au moins pour le traitement sur une durée d'un bloc.

3. Terminal selon la revendication 2, **caractérisé en ce que** ledit algorithme comprend en outre les étapes suivantes :

- si les moyens de calcul (34) sont utilisés par les moyens de traitement (32) de signaux de positionnement, alors la requête d'utilisation des ressources des moyens de calcul (34) par les moyens (31) de communication sans fil est mise en attente jusqu'à ce qu'au moins les moyens (31) de traitement de signaux de positionnement aient terminé l'exploitation des ressources des moyens de calcul (34) sur la durée dudit bloc en cours, les ressources desdits moyens de calcul (34) étant prioritairement affectés aux moyens (31) de communication sans fil à l'expiration dudit traitement de positionnement pour ledit bloc en cours.

4. Terminal selon l'une des revendications 1 à 3, **caractérisé en ce que** ladite communication sans fil utilisant une modulation OFDM est une communication répondant à la norme 802.11a ou g, dite WIFI™,

ou encore une communication réalisée grâce à une puce "dual band" répondant à la fois à une norme non compatible à la modulation OFDM et à une norme qui le soit.

5. Méthode d'optimisation des ressources des moyens de calcul (34) de transformée de Fourier Directe et Inverse d'un terminal, notamment mobile, comprenant des moyens de traitement (32) d'un signal de positionnement provenant d'un système de positionnement par satellites (GNSS), lesdits moyens de calcul (34) étant destinés à coopérer pour le calcul du point de positionnement du terminal, où le terminal (10) comportant en outre des moyens (31) de communication sans fil utilisant une modulation OFDM, ladite méthode comprend une étape de gestion de priorités pour l'affectation des ressources des moyens de calcul (34) de transformée de Fourier Directe/Inverse soit aux moyens de traitement (32) de signaux de positionnement soit aux moyens (31) de communication sans fil.

6. Méthode selon la revendication 5, **caractérisée en ce que**, les signaux de positionnement (GPS) étant décomposés en blocs, ladite méthode comporte les étapes suivantes :

   - détection de l'utilisation des moyens de calcul (34) de transformée de Fourier Directe/Inverse par les moyens (31) de communication sans fil,
   - si les moyens de calcul (34) sont utilisés par les moyens (31) de communication sans fil, alors la requête d'utilisation des ressources des moyens de calcul (34) par les moyens de traitement (32) de signaux de positionnement est mise en attente jusqu'à ce qu'au moins les moyens (31) de communication sans fil aient terminé l'exploitation des ressources des moyens de calcul (34),
   - si les moyens de calcul (34) ne sont pas utilisés par les moyens (31) de communication sans fil, alors la requête d'utilisation des ressources des moyens de calcul (34) par les moyens de traitement (32) de signaux de positionnement est satisfaite au moins pour le traitement sur une durée d'un bloc

7. Méthode selon la revendication 6, **caractérisée en ce que**, si les moyens de calcul (34) sont utilisés par les moyens de traitement (32) de signaux de positionnement, alors la requête d'utilisation des ressources des moyens de calcul (34) par les moyens (31) de communication sans fil est mise en attente jusqu'à ce qu'au moins les moyens (31) de traitement de signaux de positionnement aient terminé l'exploitation des ressources des moyens de calcul (34) sur la durée dudit bloc en cours, les ressources desdits moyens de calcul (34) étant prioritairement affectés aux moyens (31) de communication sans fil à l'expiration dudit traitement de positionnement pour ledit bloc en cours.

8. Méthode selon l'une des revendications 5 à 7, **caractérisée en ce que** ladite communication sans fil utilisant une modulation OFDM est une communication répondant à la norme 802.11a ou g, dite WIFI™, ou encore une communication réalisée grâce à une puce "dual band" répondant à la fois à une norme non compatible à la modulation OFDM et à une norme qui le soit.

**Claims**

1. Terminal, in particular a mobile terminal, comprising means (32) for processing a positioning signal coming from a satellite positioning system (GNSS), means (34) for computing direct and inverse Fourier transforms adapted to cooperate to compute the position of the terminal, in which the terminal (10) further comprises:

   - wireless communication means (31) using OFDM modulation, and
   - priority management means (33) for assigning resources of the direct/inverse Fourier transform computation means (32) either to the positioning signal processing means (32) or to the wireless communication means (31).

2. Terminal according to claim 1, **characterised in that**, the positioning signals (GPS) being divided into blocks, said priority management means (33) include an algorithm comprising the following steps:

   - detection of whether the direct/inverse Fourier transform computation means (34) are being used by the wireless communication means (31),
   - if the computation means (34) are being used by the wireless communication means (31), a request for use of the resources of the computation means (34) by the positioning signal processing means (32) is put on hold until at least the wireless communication means (31) have finished using the resources of the computation means (34),
   - if the computation means (34) are not being used by the wireless communication means (31), then the request for use of the resources of the computation means (34) by the positioning signal processing means (32) is granted at least for processing over the duration of one block.

3. Terminal according to claim 2, **characterised in that** the algorithm further comprises the following step:

- if the computation means (34) are being used by the positioning signal processing means (32), then the request for use of the resources of the computation means (34) by the wireless communication means (31) is put on hold until at least the positioning signal processing means (31) have finished using the resources of the computation means (34) over the duration of said current block, the resources of said computation means (34) being assigned with the highest priority to the wireless communication means (31) at the end of said positioning processing for said current block.

4. Terminal according to any one of claims 1 to 3, **characterised in that** said wireless communication using OFDM modulation either conforms to the 802.11a or 802.11g WiFi™ standard or is effected by means of a dual-band chip conforming to a standard that is not compatible with OFDM modulation and to a standard that is compatible therewith.

5. Method of optimising the resources of direct and inverse Fourier transform computation means (34) of a terminal, in particular a mobile terminal, comprising means (32) for processing a positioning signal coming from a satellite positioning system (GNSS), said computation means (34) being adapted to cooperate to compute the position of the terminal, in which the terminal (10) further includes wireless communication means (31) using OFDM modulation, said method comprising a priority management step for assigning resources of the direct/inverse Fourier transform computation means (34) either to the positioning signal processing means (32) or to the wireless communication means (31).

6. Method according to claim 5, **characterised in that**, said positioning signals (GPS) being divided into blocks, said method includes the following steps:

- detection of whether the direct/inverse Fourier transform computation means (34) are being used by the wireless communication means (31).
- if the computation means (34) are being used by the wireless communication means (31), a request for use of the resources of the computation means (34) by the positioning signal processing means (32) is put on hold until at least the wireless communication means (31) have finished using the resources of the computation means (34),
- if the computation means (34) are not being used by the wireless communication means (31), then the request for use of the resources of the computation means (34) by the positioning signal processing means (32) is granted at least for processing over the duration of one block.

7. Method according to claim 6, **characterised in that**, if the computation means (34) are being used by the positioning signal processing means (32), then the request for use of the resources of the computation means (34) by the wireless communication means (31) is put on hold until at least the positioning signal processing means (31) have finished using the resources of the computation means (34) over the duration of said current block, the resources of said computation means (34) being assigned with the highest priority to the wireless communication means (31) at the end of said positioning processing for said current block.

8. Method according to any one of claims 5 to 7, **characterised in that** said wireless communication using OFDM modulation either conforms to the 802.11a or 802.11g WiFi™ standard or is effected by means of a dual-band chip conforming to a standard that is not compatible with OFDM modulation and to a standard that is compatible therewith.

**Patentansprüche**

1. Terminal, insbesondere ein mobiles, umfassend Verarbeitungsmittel (32) für ein von einem satellitengestützten Positioniersystem (GNSS) stammendes Positionssignal, einen FFT/IFFT-Prozessor (34), der dazu bestimmt ist, für die Berechnung des Positibnspunktes des Terminals zu kooperieren, wobei das Terminal (10) außerdem umfasst:

- drahtlose Kommunikationsmittel (31), die eine OFDM-Modulation nutzen;
- Prioritätssteuerungsmittel (33) für die Zuweisung der Ressourcen des FFT/IFFT-Prozessors (34) entweder zu den Verarbeitungsmitteln (32) der Positionssignale oder zu den drahtlosen Kommunikationsmitteln (31).

2. Terminal nach Anspruch 1, **dadurch gekennzeichnet, dass** die Positionssignale (GPS) in Blöcke zerlegt sind, wobei die Prioritätssteuerungsmittel (33) einen Algorithmus umfassen, der die folgenden Schritte umfasst:

- Erkennung der Nutzung des FFT/IFFT-Prozessors (34) durch die drahtlosen Kommunikationsmittel (31);
- wenn der Prozessor (34) von den drahtlosen Kommunikationsmitteln (31) genutzt wird, dann wird die Nutzungsanforderung der Ressourcen des Prozessors (34) durch die Verarbeitungsmittel (32) der Positionssignale so lange in einen Wartezustand versetzt, bis zumindest die drahtlosen Kommunikationsmittel (31) die Nutzung der Ressourcen des Prozessors (34) beendet haben;
- wenn der Prozessor (34) nicht von den drahtlosen Kommunikationsmitteln (31) genutzt wird, dann wird die Nutzungsanforderung der Ressourcen des Prozessors (34) durch die Verarbeitungsmittel (32) der Positionssignale zumindest für die Verarbeitung über die Dauer eines Blocks erfüllt.

3. Terminal nach Anspruch 2, **dadurch gekennzeichnet, dass** der Algorithmus außerdem die folgenden Schritte umfasst:

- wenn der Prozessor (34) von den Verarbeitungsmitteln (32) der Positionssignale genutzt wird, dann wird die Nutzungsanforderung der Ressourcen des Prozessors (34) durch die drahtlosen Kommunikationsmittel (31) so lange in einen Wartezustand versetzt, bis zumindest die Verarbeitungsmittel (32) der Positionssignale die Nutzung der Ressourcen des Prozessors (34) über die Dauer des aktuellen Blocks beendet haben, wobei die Ressourcen des Prozessors (34) nach Ablauf der Positionsverarbeitung für den aktuellen Block mit Priorität den drahtlosen Kommunikationsmitteln (31) zugewiesen werden.

4. Terminal nach einem der Ansprüche 1 bis 3, **dadurch gekennzeichnet, dass** die drahtlose Kommunikation, die eine OFDM-Modulation nutzt, eine Kommunikation ist, welche der Norm 802.11a oder g, die als WIFI™ bezeichnet wird, entspricht, oder auch einer Kommunikation, die dank eines "Dual Band"-Chips realisiert wird, der gleichzeitig einer nicht mit der OFDM-Modulation kompatiblen Norm entspricht und einer Norm, die dies tut.

5. Verfahren zur Optimierung der Ressourcen des FFT/IFFT-Prozessors (34) eines Terminals, insbesondere eines mobilen, umfassend Verarbeitungsmittel (32) für ein von einem satellitengestützten Positioniersystem (GNSS) stammendes Positionssignal, wobei der FFT/IFFT-Prozessor (34) dazu bestimmt ist, für die Berechnung des Positionspunktes des Terminals zu kooperieren, wobei das Terminal (10) außerdem drahtlose Kommunikationsmittel (31) umfasst, die eine OFDM-Modulation nutzen; hierbei umfasst das Verfahren einen Prioritätssteuerungsschritt für die Zuweisung der Ressourcen des FFT/IFFT-Prozessors (34) entweder zu den Verarbeitungsmitteln (32) der Positionssignale oder zu den drahtlosen Kommunikationsmitteln (31).

6. Verfahren nach Anspruch 5, **dadurch gekennzeichnet, dass** die Positionssignale (GPS) in Blöcke zerlegt sind, wobei das Verfahren die folgenden Schritte umfasst:

- Erkennung der Nutzung des FFT/IFFT-Prozessors (34) durch die drahtlosen Kommunikationsmittel (31);
- wenn der Prozessor (34) von den drahtlosen Kommunikationsmitteln (31) genutzt wird, dann wird die Nutzungsanforderung der Ressourcen des Prozessors (34) durch die Verarbeitungsmittel (32) der Positionssignale so lange in einen Wartezustand versetzt, bis zumindest die drahtlosen Kommunikationsmittel (31) die Nutzung der Ressourcen des Prozessors (34) beendet haben;
- wenn der Prozessor (34) nicht von den drahtlosen Kommunikationsmitteln (31) genutzt wird, dann wird die Nutzungsanforderung der Ressourcen des Prozessors (34) durch die Verarbeitungsmittel (32) der Positionssignale zumindest für die Verarbeitung über die Dauer eines Blocks erfüllt.

7. Verfahren nach Anspruch 6, **dadurch gekennzeichnet, dass** dann, wenn der Prozessor (34) von den Verarbeitungsmitteln (32) der Positionssignale genutzt wird, die Nutzungsanforderung der Ressourcen des Prozessors (34) durch die drahtlosen Kommunikationsmittel (31) so lange in einen Wartezustand versetzt wird, bis zumindest die Verarbeitungsmittel (32) der Positionssignale die Nutzung der Ressourcen des Prozessors (34) über die Dauer des aktuellen Blocks beendet haben, wobei die Ressourcen des Prozessors (34) nach Ablauf der Positionsverarbeitung für den aktuellen Block mit Priorität den drahtlosen Kommunikationsmitteln (31) zugewiesen werden.

8. Verfahren nach einem der Ansprüche 5 bis 7, **dadurch gekennzeichnet, dass** die drahtlose Kommunikation, die eine OFDM-Modulation nutzt, eine Kommunikation ist, welche der Norm 802.11a oder g, die als WIFI™ bezeichnet wird, entspricht, oder auch einer Kommunikation, die dank eines "Dual Band"-Chips realisiert wird, der gleichzeitig einer nicht mit der OFDM-Modulation kompatiblen Norm entspricht und einer Norm, die dies tut.

EP 1 677 476 B1

# FIG_1

10

## FIG_2

32 — Module GPS

- Numérisation du signal GPS — 6
- Mémorisation — 7
- Extraction bloc d'1ms de signal — 8
- Compensation Doppler — 9
- Requête de calcul FFT — 10

31 / 33 — Module de gestion du module FFT

- Codage source de l'information — 17
- Codage correcteur d'erreur — 18
- Modulation O.F.D.M — 19

Module émission reception WIFI

- Numérisation signal Wifi — 25

- Module FFT bloqué par WIFI — 11 (Oui / Non)
- Bloquage du module FFT pour traitement bloc 1ms — 12
- FFT or FFT-1 — 13 (FFT / FFT-1)

- Module FFT bloqué par GPS — 20 (Oui / Non)
- Attente fin de traitement bloc GPS — 23
- Blocage module FFT pour session WIFI — 24

- Module FFT bloqué par GPS — 26 (Oui / Non)
- Attente fin de traitement block GPS — 29
- Blocage module FFT pour session WIFI — 30

- Calcul FFT/FFT-1 — 34

- Multiplication par réplique — 15
- Requête FFT-1 — 16
- Mise sur porteuse — 21
- Transmission — 22
- Décodage — 27
- Mise à disposition de l'information — 28

- Accumulation — 15b
- Durée d'accumulation suffisante — 15c
- Détection — 16b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2806580 A

- WO 9926370 A